# EUROPÄISCHE PATENTSCHRIFT

(11) **EP 1 871 719 B1**
(45) Veröffentlichungstag und Bekanntmachung des Hinweises auf die Patenterteilung: **25.07.2018**
(21) Anmeldenummer: 06724422.8
(22) Anmeldetag: 19.04.2006
(51) Int. Cl.: C03C 17/00, B44C 3/02

(54) **GLAS- ODER GLASKERAMIK-ARTIKEL MIT DEKORATIVER BESCHICHTUNG**
GLASS OR GLASS-CERAMIC ARTICLE WITH A DECORATIVE COATING
ARTICLE EN VERRE OU VITROCERAMIQUE DOTE D'UN REVETEMENT DECORATIF

(30) Priorität: 19.04.2005 DE 102005018246
(43) Veröffentlichungstag der Anmeldung: 02.01.2008
(73) Patentinhaber: Schott AG, 55122 Mainz (DE)
(72) Erfinder: ESEMANN, Hauke, 55286 Wörrstadt (DE); WEBER, Gerhard, 55234 Bechenheim (DE); RÖMER-SCHEUERMANN, Gabriele, 55218 Ingelheim (DE); KLUGE, Michael, 63073 Offenbach (DE); SCHUHMACHER, Jörg, 70806 Kornwestheim (DE); KNOCHE, Silke, 55257 Budenheim (DE); KALLEDER, Axel, 66440 Blieskastel (DE); ANTON, Andrea, 55595 Hüffelsheim (DE)
(74) Vertreter: Herden, Andreas F.
(86) Internationale Anmeldenummer: PCT/EP2006/003567
(87) Internationale Veröffentlichungsnummer: WO 2006/111359

(56) Entgegenhaltungen:
- EP-A- 1 416 227
- DE-A1- 10 313 630
- US-A- 5 585 136
- US-A- 5 716 424
- US-A- 5 731 091
- US-B1- 6 399 229

## Beschreibung

Die Erfindung betrifft allgemein dekorative Beschichtungen, insbesondere betrifft die Erfindung derartige Beschichtungen auf Glas oder Glaskeramik.

Glas- oder insbesondere auch Glaskeramik-Artikel werden vielfach in heißen Umgebungen verwendet. Genannt sei hier besonders der Einsatz von Glaskeramik als Kochfeld. Für eine derartige Verwendung ergeben sich an dekorative Beschichtungen besondere Anforderungen. Die dekorativen Beschichtungen müssen den Temperaturen, denen sie ausgesetzt werden und die mehrere hundert Grad betragen können, für lange Zeit widerstehen, um einen gebrauchsfähigen Artikel zu ergeben.

Es gibt seit einigen Jahren verstärkt Bestrebungen, Kochflächen einzusetzen, die im Gegensatz zur klassischen transparenten volumengefärbten und somit schwarz oder dunkel wirkenden Glaskeramik-Kochfläche eine transparente, nicht volumengefärbte Glaskeramik verwenden. Solche transparenten, nicht volumengefärbten Kochflächen sollen vermehrt aus gestalterischen Gründen eingesetzt werden, da so beispielsweise die Integration hochauflösender Displays, sowie die Realisierung diverser Farbeindrücke und optischer Anmutungen ermöglicht werden. Für die Realisierung von gefärbten, nicht spiegelnden blickdichten Beschichtungen ist die Verwendung von pigmentierten Beschichtungen besonders vorteilhaft.

Die Herstellung pigmentierter Schichten ist seit langem für die Markierung der Kochzonen, beziehungsweise für die Beschriftung der Oberseite der Glaskeramik bekannt. Hierbei finden glasflussbasierte Schichten ihren Einsatz. Für die Herstellung blickdichter Schichten insbesondere auf der Unterseite einer Glaskeramik sind solche glasflussbasierten Schichten allerdings ungeeignet, da mit solchen Schichten keine ausreichende Blickdichte erzielt werden kann, wenn gleichzeitig eine für technische Anwendungen, z.B. als Glaskeramik-Kochfläche, ausreichende Glasfestigkeit gewährleistet werden soll. Im Gegensatz dazu können mit silikonbasierten Beschichtungen Glaskeramiken erhalten werden, die bei geschickter Rezeptierung die geforderte hohe Glasfestigkeit nicht wesentlich stören. Allerdings können bei silikonbasierten Schichten bei Temperaturbelastung Verfärbungen auftreten, die für den Einsatz als Dekorschicht für z.B. eine Glaskeramikkochfläche nicht akzeptabel sind.
Eine Alternative sowohl zu glasflussbasierten als auch silikonbasierten pigmentierten Schichten stellen Sol-Gel-Schichten dar. Pigmentierte Sol-Gel-Schichten sind beispielsweise aus der DE 10313630 A1 bekannt. Diese Schichten greifen die Glasfestigkeit nicht in dem Maße an, wie etwa glasflussbasierte Schichten und sind zusätzlich auch noch deutlich farbechter als silikonbasierte Farben. Mit Sol-Gel-basierten Farben ist es möglich, beschichtete Substrate zu erhalten, bei denen die Schichten ausreichend blickdicht sind.

Aus der EP 0729442 ist ein Verfahren zur Herstellung von funktionellen glasartigen Schichten auf Substraten bekannt, bei welchen eine Zusammensetzung zur Herstellung der Schichten verwendet wird, welche durch Hydrolyse und Polykondensation von Silanen, Organosilanen, sowie gegebenenfalls aus Verbindungen von glasbildenden Elementen und durch Vermischung mit Funktionsträgern erhältlich ist. Die Funktionsträger können temperaturbeständige Farbstoffe oder Pigmente, Metall- oder Nichtmetalloxide, färbende Metallionen, sowie Metall- oder Metallverbindungs-Kolloide sein, die unter Reduktionsbedingungen zu Metall-Kolloiden reagieren. Die mit dem Funktionsträger vermischte Zusammensetzung wird dann auf das Substrat aufgetragen und dann thermisch zu einer glasartigen Schicht verdichtet.

Aus der EP 1218202 ist ferner ein Verfahren zur Herstellung bedruckter Substrate bekannt, bei welchem eine Druckpaste mit einem nach dem Sol-Gel-Verfahren erhaltenes matrixbildendes Kondensat auf Basis von Polyorganosilanen und eine oder mehrere färbende, lumineszierende, leitfähige und/oder katalytisch wirksame Füllstoffe bildmäßig auf das Substrat aufbringt und durch eine Wärmebehandlung verdichtet. Dabei wird die Verdichtung bei einer Temperatur durchgeführt, die niedriger liegt, als die Glasübergangstemperatur der sich bildenden Matrix.

Bei beiden Verfahren werden dementsprechend Schichten mit einer glasartigen Matrix erhalten. Derartige Schichten sind im allgemeinen vergleichsweise dicht, insbesondere permeationsdicht und können dann auch das Eindringen von Fremdstoffen verhindern. Auch dies ist ein wichtiger Aspekt, da diese das Erscheinungsbild der Schichten verändern oder sogar das darunterliegende Substrat angreifen können. Allerdings setzt die Bildung einer glasartigen Schicht einen geringen Pigmentanteil voraus. Um einen gewünschten optischen Effekt, beispielsweise eine Erscheinung von gebürstetem Edelstahl zu erreichen, sind dann aber aufgrund des geringen Pigmentanteils dicke Schichten erforderlich. Dies kann wiederum bereits aufgrund der im allgemeinen unterschiedlichen Wärmeausdehnungskoeffizienten von Substrat und Beschichtung nachteilig sein. Wird das Substrat in einer Hochtemperaturumgebung eingesetzt, beispielsweise in Form eines beschichteten Glaskeramik-Kochfelds, kann die massive glasartige Schicht bei der auftretenden Temperaturwechselbelastung abplatzen oder aufreißen. Auch kann es zu einer Festigkeitsminderung des Substrats kommen.

Der Erfindung liegt daher die Aufgabe zugrunde, eine Dekorbeschichtung bereitzustellen, welche auf Glas und Glaskeramik eine verbesserte Temperaturbeständigkeit und Festigkeit zeigt und sich auch nicht oder zumindest nicht mehr wesentlich festigkeitsmindernd auf das Substrat auswirkt. Als nicht wesentlich festigkeitsmindernd wird dabei in der vorliegenden Erfindung verstanden, dass die Glasfestigkeit durch die Beschichtung verbessert oder nicht oder nur in dem Maße beeinträchtigt wird, dass die gesetzlichen Anforderungen an das Produkt, wie z.B. an eine Glaskeramik-Kochfläche, noch voll erfüllt werden.

Diese Aufgabe wird bereits in höchst überraschend einfacher Weise durch den Gegenstand der unabhängigen Ansprüche gelöst. Vorteilhafte Ausgestaltungen und Weiterbildungen der Erfindung sind in den Unteransprüchen angegeben.

Demgemäß sieht die Erfindung ein Verfahren zum Herstellen von Glas- oder Glaskeramik-Artikeln mit einer Dekorschicht vor, bei welchem wenigstens ein Dekorpigment mit einer vorzugsweise nur geringen Menge eines Sol-Gel-Bindemittels vermischt und das oder die mit dem Sol-Gel-Bindemittel vermischten Pigmente nach Aufbringen auf dem Glas- oder Glaskeramik-Substrat des Artikels unter Ausbildung einer Dekorschicht mit porösem, vorzugsweise nanoporösem keramikartigem Gefüge durch Tempern ausgehärtet wird. Damit wird ein anderer Weg beschritten, als er etwa in der EP 1218202 oder EP 0729442 vorgeschlagen wird.

Das Sol-Gel-Bindemittel und das oder die Pigmente bilden bei der erfindungsgemäßen Zusammensetzung keine glasartigen Schichten, sondern die Schicht ist im Unterschied dazu vielmehr porös, beziehungsweise Poren enthaltend und keramikartig. Es hat sich überraschend gezeigt, dass auf diese Weise die Schicht elastischer wird und so unterschiedliche Temperaturausdehnungskoeffizienten zwischen Substrat und Dekorschicht ausgeglichen werden können. Damit wird auch das Abplatzen der Dekorschicht und/oder die Entstehung von festigkeitsmindernden Mikrorissen in der Dekorschicht oder dem Substrat vermieden.

Als ein keramikartiges Gefüge wird im Sinne der Erfindung eine Struktur der Schicht verstanden, die anorganisch, insgesamt nichtmetallisch im Sinne von metallischer Leitfähigkeit, und insbesondere überwiegend polykristallin ist. Damit wird jedoch nicht ausgeschlossen, daß kleine Bereiche in der Schicht oder geringe Schichtanteile, wie beispielsweise im ausgehärteten Sol-Gel-Bindemittel auch noch amorphe Struktur aufweisen können. Unter einem Sol-Gel-Bindemittel wird weiterhin im Sinne der Erfindung ein als Bindemittel für die weiteren Bestandteile der Schicht, insbesondere die Pigmente dienendes Sol-Gel verstanden.

Alternativ oder zusätzlich kann eine erfindungsgemäße Dekorschicht auch als eine Dekorschicht mit einem ausgehärteten Sol-Gel-Bindemittel beschrieben werden, bei welcher der überwiegende Anteil am Schichtvolumen durch Füllstoffe und/oder Pigmentpartikel gebildet wird.

Aufgrund des hohen Anteils von Pigmentpartikeln kann eine solche Schicht deutlich dünner sein, als bisher bekannte blickdichte Pigmentschichten. Vorzugsweise beträgt die Schichtdicke höchstens 70 Mikrometer, ist im allgemeinen aber deutlich geringer. Durch die geringe Schichtdicke wird die Festigkeit des beschichteten Artikels nur geringfügig beeinflusst. Auch werden thermische Spannungen beim Erhitzen reduziert.

Insbesondere auf Glaskeramik ist es im allgemeinen problematischer, fest haftende, dauerhafte Schichten aufzubringen, die auch einer hohen Temperaturbelastungen, wie sie beim Betrieb beispielsweise eines Kochfelds auftreten, über längere Zeit standhalten und dabei auch nicht wesentlich festigkeitsmindernd sind. Dies liegt unter anderem an der niedrigen Temperaturausdehnung der Glaskeramik. Es hat sich aber gezeigt, daß die erfindungsgemäßen Schichten mit hohem Pigmentanteil diese Anforderungen erfüllen.

Ein insbesondere mit dem erfindungsgemäßen Verfahren herstellbarer Glas- oder Glaskeramik-Artikel mit Dekor umfasst dementsprechend ein Glas- oder Glaskeramik-Substrat mit einer Dekorschicht, wobei die Dekorschicht ein poröses, insbesondere nanoporöses keramikartiges Gefüge mit Pigmenten und einem ausgehärteten Sol-Gel-Bindemittel umfaßt.

Bei dem während des Temperns auftretenden Aushärtungsprozeß kommt es im allgemeinen vorteilhaft noch zu einer Verdichtung des Sol-Gel-Bindemittels und damit einhergehend insgesamt einer dichteren und festeren Struktur der Schicht.

Besonders bevorzugt wird das Sol-Gel-Bindemittel und das oder die Dekorpigmente und eventuell weitere Komponenten vorgemischt und dann das erhaltene Gemisch auf das Substrat aufgetragen, wobei dann nachfolgend die so aufgetragene Beschichtung durch Tempern zur fertigen Dekorschicht mit porösem, keramikartigem Gefüge ausgehärtet wird. Dies ist besonders von Vorteil, um eine gute Durchmischung der einzelnen Bestandteile für die Dekorschicht zu erreichen.

Um eine gewünschte Konsistenz der vermischten Komponenten zu erreichen, können dem Gemisch auch noch weitere Komponenten, wie Füllstoffe, Lösungsmittel oder Additive hinzugegeben werden. Im Sinne der Erfindung wird unter einem Lösungsmittel auch ein Dispersionsmedium für die Partikel des Sols verstanden.

Vorzugsweise wird das Sol-Gel-Bindemittel aus einem Sol hergestellt, welches unter Reaktion wenigstens einer hydrolysierbaren metallorganischen, insbesondere einer organischen Silizium-Verbindung, beispielsweise in alkoholischer Lösung mit Wasser unter Bildung von Kieselsäure oder organischen Kieselsäurederivaten, beziehungsweise organisch substituierter Kieselsäure in einer Hydrolysereaktion und anschließender Kondensationsreaktion erzeugt wird. Unter einer metallorganischen Verbindung wird hier vereinfacht sowohl eine metallorganische, als auch eine organometallische Verbindung verstanden.

Das Sol-Gel-Bindemittel oder das Sol enthält gemäß einer bevorzugten Weiterbildung wenigstens teilweise metallorganische, insbesondere organische Silizium-Verbindungen, bei welchen nach der Hydrolyse ein oder mehrere organische Reste gebunden bleiben. Auf diese Weise enthält das ausgehärtete Sol-Gel-Bindemittel an ein Metalloxid-Netzwerk, vorzugsweise ein SiO₂-Netzwerk gebundene organische Bestandteile. Die organischen Reste oder Bestandteile können dabei in vorteilhafter Weise beispielsweise wasserabweisende Eigenschaften der Dekorschicht verbessern.

Überraschend sind auch derartige Dekorschichten mit organischen Bestandteilen ausreichend temperaturbeständig, um sie auch für Glas- oder Glaskeramik-Artikel einsetzen zu können, die wiederholt hohen Temperaturen ausgesetzt sind. Gedacht ist hier unter anderem auch an beschichtete Glaskeramik-Kochfelder. Um das Verbleiben gebundener organischer Reste in der fertigen Dekorschicht zu erreichen, kann das Sol oder das Sol-Gel-Bindemittel beispielsweise ein Trialkoxyalkylsilan, insbesondere Triethoxymethylsilan (TEMS) enthalten. Vorzugsweise wird das Sol-Gel-Bindemittel aus einem Tetraethoxysilan (TEOS)- und/oder einem TEMS-basierten Sol hergestellt. Besonders bevorzugt wird dabei ein Sol mit beiden Bestandteilen verwendet. Zur Herstellung des Sols kann dann Triethoxymethylsilan und Tetraethoxysilan gemischt, mit Wasser und einer vorzugsweise geringen Menge einer Säure, sowie gegebenenfalls einem Lösungsmittel vermischt und zur Reaktion gebracht werden, um das Sol, beziehungsweise Sol-Gel-Bindemittel zu erhalten.

Ist das Sol, beispielsweise wie vorstehend beschrieben, hergestellt und zu den die keramikartige Schicht im wesentlichen bestimmenden Pigmenten und eventuellen Füllstoffen gegeben worden, kann dann das Sol-Gel-Bindemittel unter zumindest teilweiser Verflüchtigung von zugesetzten und/oder bei der Reaktion entstehendem Lösungsmittel des Sols erzeugt werden. Damit setzt eine beschleunigte Kondensationsreaktion ein, und es bildet sich ein Gel mit einem Metalloxid-Netzwerk. Das Sol kann insbesondere den bei der Hydrolyse entstehenden und/oder zugesetzten Alkohol als Lösungsmittel oder Dispersionsmedium enthalten, der sich dann verflüchtigt. Die Verflüchtigung des Lösungsmittels wird bevorzugt nach dem Auftrag der Schicht auf das Glas- oder Glaskeramik-Substrat vorgenommen. Beim nachfolgenden Tempern spaltet sich dann restliches Wasser, beziehungsweise Alkohol vom Sol-Gel-Bindemittel unter Bildung des festen Metalloxid-Gerüsts, insbesondere SiO₂- oder organisch modifizierten SiO₂-Gerüsts ab.

Wird beispielsweise Triethoxymethylsilan und/oder Tetraethoxysilan für das Sol-Gel-Bindemittel verwendet, so bildet sich SiO₂, beziehungsweise methylsubstituiertes SiO₂ als Metalloxid-Gerüst im ausgehärteten Sol-Gel-Bindemittel der fertigen Dekorschicht. Dies wird nicht nur wegen der guten Verarbeitbarkeit von Silanen im allgemeinen bevorzugt, außerdem wird auf diese Weise auch eine gute Barrierewirkung der Schicht erreicht.

Um die vorteilhaften Eigenschaften der Dekorschicht, Porosität und keramikartiges Gefüge, zu erreichen, wird die Dekorschicht besonders bevorzugt so hergestellt, daß der Gewichtsanteil von Pigmenten und eventuellen Füllstoffen höher als der Gewichtsanteil des verfestigten und ausgehärteten Sol-Gel-Bindemittels ist. Derartige Schichten enthalten damit als überwiegenden Bestandteil Pigmente und eventuelle Füllstoffe, die dann nicht mehr, wie aus dem Stand der Technik bekannt ist, in einer glasartigen Matrix eingebettet sind, sondern nur durch geringe Mengen ausgehärteten Sol-Gels zusammengehalten werden. Bevorzugt, beträgt dabei der Anteil von Sol-Gel-Bindemittel höchstens 40, vorzugsweise 30 Gewichtsprozent, besonders bevorzugt höchstens 20 Gewichtsprozent in der Schicht. Drückt man das Verhältnis der Anteile von Sol-Gel-Bindemittel zu den übrigen Anteilen der Schicht, insbesondere von Füllstoffen und Pigment in Volumenprozent aus, können sich abweichende Werte ergeben, da der Volumenanteil von der Dichte der verwendeten Bestandteile abhängt.

Der Volumenanteil des Sol-Gel-Bindemittels in der verfestigten, beziehungsweise fertigen Schicht beträgt vorzugsweise höchstens 40%.

Wird ein Siliziumoxid-haltiges Sol-Gel-Bindemittel eingesetzt, so ist dabei ein Gewichtsanteil des Sol-Gel-Bindemittels berechnet als SiO₂ von höchstens 25% der Gesamtmasse der Schicht, bevorzugt höchstens 20% der Gesamtmasse der Schicht von Vorteil, um eine solche poröse Schicht mit keramikartigem Gefüge, die hinreichend elastisch ist, zu erzeugen.

Als Pigmente werden weiterhin bevorzugt Effektpigmente eingesetzt. Besonders ist hier an Metallic-Effekte, wie etwa eine Erscheinung von gebürstetem Metall gedacht. Diese Ausgestaltung der Erfindung paßt vom Erscheinungsbild besonders gut zu dem im Küchenbereich gerne und verbreitet eingesetzten Edelstahl, insbesondere von gebürstetem oder anderweitig angerauhtem Edelstahl. Dazu kann das Dekorpigment plättchenförmige Pigmentpartikel enthalten. Zur Erzielung von Metallic-Effekten sind dabei besonders plättchenförmige Pigmente geeignet, zum Beispiel Glimmerplättchen, insbesondere beschichtete Glimmerplättchen, und/oder Metallplättchen, wie beispielsweise Aluminium-Plättchen.

In einer weiteren Ausführungsform können lumineszente Pigmente bzw. sogenannte Leuchtphosphore wie beispielsweise YVO₄ : Eu³⁺, Y₂O₄: Eu³⁺, LaPO₄: Ce³⁺, Tb³⁺ und BaMg₂Al₁₆O₂₇:Eu²⁺ zum Einsatz kommen. Auch der Einsatz sogenannter Nachleuchter mit einer Abklingzeit von >1 sec, wie z.B. ZnS:Cu oder SrAl₂O₄:Eu²⁺ ist möglich. Diese Stoffe ermöglichen es, neue Designeffekte und Dekorationsvarianten herzustellen. Da die Anregung dieser Stoffe durch eine Kombination von Licht und Wärme erfolgt, können warme, bzw. heiße Bereiche einer solcherart beschichteten Glas- oder Glaskeramikplatte besonders gekennzeichnet werden, was die Sicherheit des Produktes für den Anwender erhöht, wie z.B. im Falle von Kochflächen.

Für die optische Wirksamkeit der Pigmente in der Schicht ist es dabei besonders von Vorteil, wenn mit hochbrechenden Metalloxiden beschichtete Glimmerplättchen verwendet werden. Auch Effektpigmente mit anderen temperaturbeständigen Materialien, wie etwa mit Glaspartikeln können, je nach zu erzielender optischer Wirkung eingesetzt werden.

Eine regellose Anordnung solcher Pigmente führt nur zu einem schwachen Metalleffekt, wie er beispielsweise bei Metallic-Lacken auftritt. Es hat sich aber gezeigt, daß eine metallische Erscheinung in der Art von leicht angerauhtem oder gebürstetem Metall erreichen läßt, wenn sich die plättchenförmigen Partikel überwiegend parallel zur Oberfläche des Glas- oder Glaskeramik-Substrats ausrichten. Wird dies erreicht, zeigt sich außerdem überraschend, daß derartige Dekorbeschichtungen außerdem deutlich widerstandsfähiger, insbesondere abrieb- und kratzbeständiger sind. Es hat sich weiterhin überraschend gezeigt, daß eine solche Ausrichtung durch Zugabe zumindest eines Füllstoffs erreichbar ist. Eine besonders gute Ausrichtung ist insbesondere mit Füllstoffen mit kugelförmigen Partikeln möglich. Ein solcher Füllstoff kann beispielsweise pyrogene Kieselsäure enthalten, die kleine kugelförmige Partikel bildet. Auch hat es sich für die Eigenschaften der Dekorschicht als günstig erwiesen, kolloiddisperse SiO₂-Partikel der Beschichtungszusammensetzung als Füllstoff hinzuzufügen. Insbesondere hat es sich als günstig erwiesen, wenn der Füllstoffanteil 40 Gewichtsprozent der Masse des oder der insbesondere plättchenförmigen Pigmente in der Beschichtungszusammensetzung nicht übersteigt. Vorzugsweise werden Füllstoffe in Form kolloiddisperser SiO₂-Partikel und/oder pyrogener Kieselsäure-Partikel mit einem Anteil von jeweils höchstens 20 Gewichtsprozent der Masse des oder der insbesondere plättchenförmigen Pigmente zugegeben. Kolloiddisperse SiO₂-Partikel, beziehungsweise SiO₂-Partikel aus einer Kolloiddispersion können eine andere Größe aufweisen als pyrogene Kieselsäurepartikel, wobei sich das Vorhandensein beider Arten von Füllstoff-Partikeln als für die Eigenschaften der Schicht und/oder des Substrats, wie etwa deren Festigkeit als besonders günstig erwiesen hat.

Das keramikartige, poröse Schichtgefüge der Dekorschicht kann sich bedingt durch das Sol-Gel-Verfahren bereits deutlich unterhalb der Sintertemperatur der verwendeten Schichtbestandteile, insbesondere der Pigmente und Füllstoffe ausbilden. Eine Erhitzung der Schicht auf diese Temperatur, welche beispielsweise zur Abspaltung organischer Bestandteile oder Veränderungen am Substrat führen könnte, ist daher nicht notwendig. Um die Wasser- und/oder Alkohol-Abspaltung und Ausbildung eines Metalloxid-Gerüsts, insbesondere eines SiO₂-Gerüsts zu beschleunigen, wird jedoch ein Tempern bei einer Temperatur von zumindest 200°C bevorzugt.
Noch eine Maßnahme, um eine auch nach längerer Temperaturbelastung farbechte Beschichtung zu erhalten, ist, einen anorganischen Eindicker wie z.B. organisch modifizierte Schichtsilikate oder Kieselsäuren für die Rezeptur zu verwenden. Durch Zugabe eines solchen Eindickers, bevorzugt Kieselsäure, kann die Rheologie der hergestellten Paste so eingestellt werden, daß ein gleichmäßiger Auftrag, beispielsweise durch Siebdruck oder Rakeln erfolgen kann, ohne daß es zu sichtbaren Verlaufspuren in der Schicht kommt. Als geeigneter anorganischer Eindicker anstelle der sonst üblicherweise verwendeten organischen Eindicker, wie die aus der DE 1013630 A1 bekannte Cellulose hat sich dabei insbesondere pyrogene Kieselsäure und/oder kolloidale SiO₂-Partikel erwiesen. Eine Zugabe von pyrogener Kieselsäure und/oder kolloidalet SiO₂-Partikel bringt damit einen Mehrfachnutzen mit sich. Zum einen wirken derartige Füllstoffpartikel mit plättchenförmigen Pigmentpartikeln zusammen, die sich unter Zusatz dieser Partikel verstärkt parallel zur beschichteten Oberfläche ausrichten, zum anderen kann gleichzeitig die Rheologie der damit hergestellten Paste eingestellt werden. Weiterhin ist die pyrogene Kieselsäure hoch temperaturstabil und verhindert stärkere Verfärbungen, die bei Einsatz organischer Eindicker auftreten können.

Noch ein weiterer Vorteil eines anorganischen Eindickers, wie insbesondere von pyrogener Kieselsäure ist dessen verbesserte Säurestabilität. Eine entsprechend mit Cellulose oder einem Cellulosederivat eingedickte Paste wäre aufgrund der als Katalysator für die Hydrolyse und Kondensation zugesetzten Säure im Sol-Gel nur sehr kurz haltbar und müßte sehr schnell nach deren Zubereitung verarbeitet werden. Demgegenüber ist eine erfindungsgemäß mit pyrogener Kieselsäure eingedickte Paste lagerstabil.

Im Vergleich mit metallischen Beschichtungen besteht ein Vorteil der dekorativen pigmentierten Sol-Gel-Schichten darin, daß sie keine Leitfähigkeit aufweisen und somit auch dann zum Einsatz kommen können, wenn die Kombination einer solchen Beschichtung mit Touchsensoren, beispielsweise bei einer unterseitig beschichteten Kochfläche, gewünscht ist.

Es hat sich zwar gezeigt, daß die erfindungsgemäße Dekorschicht sehr resistent, beispielsweise säureresistent ist und sogar eine gewisse Barrierewirkung zum Schutz des Substrats bereitstellt, allerdings kann dies weiter verbessert werden, wenn eine zusätzliche Versiegelung auf die Dekorschicht aufgebracht wird. Um eine verbesserte Wasserabweisung zu erreichen, kann die Dekorschicht beispielsweise mit Silikonen versiegelt werden. Bei einer solchen rückseitigen Versiegelung stört auch eine möglicherweise auftretende Verfärbung aufgrund der durch den hohen Pigmentgehalt der erfindungsgemäßen Schichten blickdichten Oberfläche nicht. Diese bieten darüber hinaus auch eine Versiegelungswirkung gegen ölhaltige Substanzen, zum Beispiel Lebensmittel, die beim Einsatz eines erfindungsgemäß ausgebildeten Kochfelds mit der Dekorschicht in Berührung kommen können.

Durch Abscheidung einer Metalloxid-basierten Schicht, insbesondere einer SiO₂-basierten Schicht auf der Dekorschicht kann weiterhin die Barrierewirkung deutlich verbessert werden. Dazu eignet sich unter anderem Sputtern, chemische Dampfphasenabscheidung, wie insbesondere plasmainduzierte chemische Dampfphasenabscheidung oder pyrolytische Abscheidung, beispielsweise aus Flamme oder Corona. Letzteres hat den Vorteil, daß das Verfahren nicht im Vakuum erfolgen muß. Auch möglich ist aber beispielsweise das Abscheiden durch Aufdampfen. Die zusätzliche Barriereschicht kann weiterhin vorteilhaft auch ebenso wie die Dekorschicht durch eine Sol-Gel-Beschichtung hergestellt werden. Dabei kann es sich um eine modifizierte Rezeptur oder im einfachsten Fall um die gleiche Rezeptur wie die der ersten Schicht, mit oder ohne Zusatz von Pigmenten und/oder Füllstoffen handeln. Auf diese Weise kann das Herstellen mit der gleichen apparativen Ausrüstung wie für das Herstellen der Dekorschicht erfolgen.

Eine derartige zusätzliche Barriereschicht ist besonders vorteilhaft, wenn der Glas- oder Glaskeramik-Artikel verbrennungsbeheizt wird. Beispielsweise ist dies der Fall bei gasbeheizten Glaskeramik-Kochfeldern. Hier ergibt sich das Problem, daß bei der Verbrennung auch Schwefeloxide gebildet werden können. Diese setzen sich zusammen mit Wasser, welches ebenfalls bei der Verbrennung gebildet wird, zu Säure um. Diese wiederum kann die Glaskeramik angreifen. Mit der Dekorschicht in Verbindung mit der Versiegelung kann aber erfindungsgemäß nicht nur eine optisch ansprechende Erscheinung, sondern darüber hinaus auch ein Artikel mit erhöhter Haltbarkeit geschaffen werden.

Allgemein ist insbesondere auf Glaskeramik ein Zweischichtaufbau besonders bevorzugt, um eine bessere Haftung und Schichtstabilität auf der ansonsten für Beschichtungen problematischeren Glaskeramik zu erreichen. Dabei kann auf eine erste erfindungsgemäße Beschichtung insbesondere eine weitere Sol-Gel-basierte Schicht aufgebracht werden. Im einfachsten Fall wird für die zweite Schicht die gleiche oder eine ähnliche Rezeptur verwendet. Demgemäß wird bei dieser Weiterbildung der Erfindung eine weitere Schicht auf das Substrat aufgetragen, bei welcher wenigstens ein Dekorpigment mit einem Sol-Gel-Bindemittel vermischt ist, und das mit dem Sol-Gel-Bindemittel vermischte Pigment auf dem Glas- oder Glaskeramik-Substrat des Artikels unter Ausbildung einer Schicht mit porösem keramikartigem Gefüge durch Tempern ausgehärtet wird.

Ein solcher Zweischichtaufbau hat sich dabei als ein Weg erwiesen, insgesamt besonders vorteilhafte Beschichtungseigenschaften zu erhalten. Insbesondere hat sich gezeigt, daß die Haftung des Schichtverbunds insgesamt überraschend noch weiter verbessert werden kann, wenn die beiden Schichten bei unterschiedlichen Temperaturen eingebrannt werden, insbesondere, wenn die erste Schicht bei einer höheren Temperatur als beim Tempern der später aufgebrachten zweiten Schicht eingebrannt wird. Besonders günstig hat es sich dabei erwiesen, wenn die erste Schicht bei einer Temperatur von zumindest zeitweise wenigstens 350 °C und die zweite Schicht bei einer Temperatur von höchstens 300 °C eingebrannt wird. Vorzugsweise enthält auch die weitere Schicht Pigmente. Insbesondere kann auch die gleiche Rezeptur, beziehungsweise Mischung aufgetragen werden, die auch für die erste Schicht verwendet wird. Ein solcher Mehrfachauftrag der Mischung, vorzugsweise mit zwischengeschaltetem Tempern ist besonders einfach zu bewerkstelligen. Mit einem Mehrfachauftrag einer erfindungsgemäßen pigmenthaltigen Sol-Gel-basierten Beschichtung wird demgemäß ein Glas- oder Glaskeramik-Artikel mit einer mehrschichtigen, vorzugsweise zweischichtigen Dekorschicht erhalten. Als Gesamtschichtdicke einer solchen Doppelschicht sind im allgemeinen ebenfalls maximal 70 Mikrometer ausreichend, um eine blickdichte Beschichtung zu erzeugen.

Um eine glatte, robuste Oberfläche zu erhalten und die Dekorschicht vor Abnutzung zu schützen, wird bei einem Glaskeramik-Kochfeld die Dekorschicht vorzugsweise auf der Unterseite angeordnet. Es hat sich überraschend gezeigt, daß die Dekorschicht sogar eine Heizzone des Kochfelds bedecken kann, da sie hinreichend wärmeleitfähig und temperaturbeständig ist. Auch mit einer Dekorschicht mit Effektpigmenten, wie etwa Glimmerplättchen oder ähnlichen Metalleffekt-Pigmenten im Bereich der Heizzonen, die eine undurchsichtige Schicht schaffen, kann ein Kochfeld betrieben werden.

Neben einem vollflächigem Auftrag der Dekorschicht kann gemäß einer Weiterbildung der Erfindung die Dekorschicht auch lateral strukturiert auf das Substrat aufgebracht werden. Beispielsweise kann dies durch geeignete Drucktechniken, wie Siebdruck erfolgen. Insbesondere kann dazu eine nicht vollflächige Dekorschicht aufgebracht werden. Beispielsweise können dabei verschiedene Bereiche, wie etwa Fenster für Sensoren oder Displays frei von der Dekorschicht gehalten werden. Auch können mehrere in Zusammensetzung und/oder Farbe und/oder Anmutung unterschiedliche Beschichtungen miteinander kombiniert werden. Dazu können vorteilhaft verschiedene Bereiche der Oberfläche des Substrats mit Dekorschichten unterschiedlicher Anmutung und/oder Farbe versehen werden.

Eine solche erfindungsgemäße Beschichtung hat sich weiterhin als nicht wesentlich festigkeitsmindernd erwiesen. Die Festigkeit des so beschichteten Artikels kann sogar höher sein, verglichen mit dem unbeschichteten Artikel. Jedenfalls wird gemäß einer Ausführungsform der Erfindung die Bruchfestigkeit eines beschichteten Artikels um höchstens 5% verglichen mit einem unbeschichteten Artikel vermindert. Wird beispielsweise ein Federhammertest gemäß der Norm IEC 60068-2-75 oder EN 60335-1 durchgeführt, wird, sofern der beschichtete Artikel nicht sogar fester ist als der unbeschichtete Artikel, eine Verringerung der durchschnittlichen Kraft auf den Federhammer bis zum Bruch von höchstens 5% erzielt.

Im folgenden wird die Erfindung anhand von Ausführungsbeispielen und unter Bezugnahme auf die Zeichnungen näher erläutert, wobei gleiche und ähnliche Elemente mit gleichen Bezugszeichen versehen sind und die Merkmale verschiedener Ausführungsbeispiele miteinander kombiniert werden können.

Es zeigen:
- Fig. 1: einen schematischen Querschnitt durch ein Glas- oder Glaskeramik-Substrat mit einer erfindungsgemäßen Dekorschicht,
- Fig. 2 und 3: elektronenmikroskopische Aufnahmen von Dekorschichten ohne und mit Zugabe von Füllstoffen,
- Fig. 4: eine Aufsicht auf ein erfindungsgemäß beschichtetes Glaskeramik-Kochfeld.

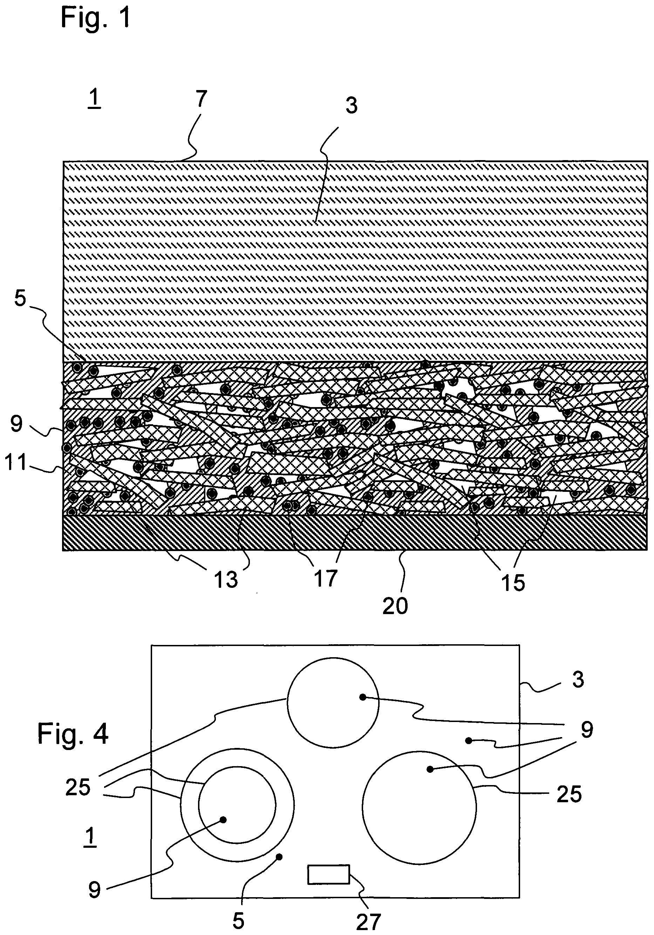

In Fig. 1 ist ein schematischer Querschnitt durch einen erfindungsgemäßen Glas- oder Glaskeramik-Artikel 1 mit einer Dekorschicht dargestellt. Der Glas- oder Glaskeramik-Artikel 1 umfaßt bei diesem Beispiel ein Glas- oder Glaskeramik-Substrat 3 mit Seiten 5 und 7. Der Artikel 1 kann insbesondere ein Glaskeramik-Kochfeld sein. Auf der Seite 5 des Substrats 3 ist eine erfindungsgemäße Dekorschicht 9 aufgebracht. Ist der Artikel 1 ein Glaskeramik-Kochfeld, so wird die Dekorschicht 9 besonders bevorzugt auf der Unterseite des Kochfelds aufgebracht, um eine Abnutzung der Schicht durch den Gebrauch zu verhindern.

Zur Herstellung der Dekorschicht 9 wird Dekorpigment mit einem Sol-Gel-Bindemittel vermischt und das mit dem Sol-Gel-Bindemittel vermischte Pigment auf dem Glas- oder Glaskeramik-Substrat 3 des Artikels 1 unter Ausbildung der Dekorschicht 9 durch Tempern ausgehärtet. Dabei bildet sich erfindungsgemäß keine glasartige Schicht, bei welchem die Pigmente in einer Matrix eingeschlossen sind, sondern vielmehr eine Schicht mit einem porösen keramikartigen Gefüge. Die Schicht 9 ist demgemäß überwiegend polykristallin.

Um einen Metalleffekt zu erzielen, umfaßt das Dekorpigment bei diesem Beispiel plättchenförmige Pigmentpartikel 13. Dazu kann ein Effektpigment verwendet werden, welches Glimmerplättchen, insbesondere beschichtete Glimmerplättchen enthält. Eine weitere Möglichkeit sind auch Metallplättchen-Pigmente, wie insbesondere AluminiumPlättchenpigmente und/oder Pigmente mit Glaspartikeln. Glimmerpigmente und andere Effektpigmente mit temperaturbeständigen Materialien, wie etwa Glas werden jedoch aufgrund ihrer hohen Temperaturbeständigkeit bevorzugt.

Neben den Pigmentpartikeln 13 sind in der Schicht 9 auch noch Füllstoff-Partikel 17 vorhanden. Die Füllstoff-Partikel 17 und Dekorpigment-Partikel 13 werden durch ein Sol-Gel-Bindemittel 11 zu einer festen Schicht verbunden, wobei der Gewichtsanteil von Pigmentpartikel 13 und Füllstoffpartikeln 17 höher als der Gewichtsanteil des verfestigten und ausgehärteten Sol-Gel-Bindemittels 11 ist. Bevorzugt beträgt bei einer wie in Fig. 1 gezeigten Dekorschicht 9 dabei der Anteil von Sol-Gel-Bindemittel 11 höchstens 40 Gewichtsprozent, vorzugsweise höchstens 30 Gewichtsprozent, besonders bevorzugt höchstens 20 Gewichtsprozent der Gesamtmasse der Schicht. Aufgrund des hohen Feststoffanteils, beziehungsweise des geringen Anteils von Sol-Gel-Bindemittel 11 bleiben dann Poren 15 bestehen. Die insgesamt poröse Schicht erweist sich als deutlich flexibler als glasartige Dekorschichten, so daß Unterschiede im Temperaturausdehnungskoeffizient von Substrat 3 und Schicht 9 ausgeglichen werden können. Auch können anders als in Fig. 1 dargestellt, Poren zwischen den Füllstoff- und Pigmentpartikeln gebildet werden, die dann mit ausgehärteten Sol-Gel-Bindemittel teilweise ausgefüllt sind.

Besonders bevorzugt wird das Sol-Gel-Bindemittel aus einem Tetraethoxysilan- und Triethoxymethylsilan- basierten Sol hergestellt. Triethoxymethylsilan ist dabei eine organische Silizium-Verbindung, bei welcher nach Hydrolyse und Kondensationsreaktion, insbesondere auch in der fertigen Dekorschicht 9 ein organischer Rest gebunden bleibt. Dies ist günstig, um eine trotz ihrer Porosität wasserabweisende Dekorschicht herzustellen. Außerdem verbessern die organischen Bestandteile die Flexibilität der Schicht.

Der Beschichtungsprozeß wird dabei bevorzugt wie folgt vorgenommen:
Es wird eine Mischung mit TEOS und TEMS hergestellt. Als zusätzliches Lösungsmittel kann Alkohol dienen. Außerdem wird eine wässrige Metalloxid-Dispersion, insbesondere eine SiO₂-Dispersion in Form kolloiddisperser SiO₂-Partikel mit Salzsäure vermischt. Die beiden Gemische können zusätzlich zur Homogenisierung gerührt werden. Beide Gemische werden dann zusammengemischt. Diese Zusammensetzung kann dann vorteilhaft für eine gewisse Zeit, beispielsweise etwa eine Stunde zur Herstellung des Sols, vorzugsweise unter Rühren reifen. Parallel zum Ansatz dieser Zusammensetzung können die Pigmente und eventuell weiterer Füllstoff abgewogen und diese Feststoffanteile dann der Zusammensetzung zugegeben und dispergiert werden. Bevorzugt wird pyrogene Kieselsäure als Füllstoff zugegeben. Die pyrogene Kieselsäure und/oder die kolloidale SiO₂-Dispersion bilden in der fertigen Schicht 9 kugelförmige Füllstoffpartikel. Der Anteil von Füllstoffen in Form von kolloiddispersen SiO₂-Partikeln und zusätzlich zugegebenen Füllstoffen wie pyrogener Kieselsäure beträgt jeweils kleiner 20 Gewichtsprozent der Masse des oder der plättchenförmigen Pigmente. Insgesamt beträgt der Gewichtsanteil von Füllstoff-Partikeln 17 dabei bevorzugt höchsten 40 Gewichtsprozent des Gewichtsanteils der Pigmentpartikel 13. Die pyrogene Kieselsäure und/oder die SiO₂-Partikel der kolloidalen SiO₂-Dispersion dienen außerdem zur Einstellung der gewünschten Viskosität der aufgetragenen Paste und damit gleichzeitig als hochtemperaturfestes Rheologie-Additiv, beziehungsweise als hochtemperaturfester Eindicker.

Abhängig von der Art des Auftrags auf das Substrat können unterschiedliche Lösungsmittel, Rheologieadditive und andere Zusatzstoffe der Mischung zugesetzt werden.
Das Sol wandelt sich durch Verflüchtigung des Alkohols und durch Kondensationsreaktion des hydrolysierten TEOS und TEMS in ein Sol-Gel-Bindemittel in Form eines Metalloxid-Gels um. Dieser Prozeß wird insbesondere nach dem Auftrag der Zusammensetzung auf das Substrat beschleunigt, so daß sich die Schicht unter Bildung des Gels verfestigt. Insbesondere bildet sich bei TEOS und TEMS dabei ein SiO₂-Netzwerk, insbesondere auch ein zumindest teilweise methylsubstituiertes SiO₂-Netzwerk.

Anschließend wird das Substrat 3 zusammen mit der vorverfestigten Schicht 9 getempert, wobei beim Tempern die Reaktion zum SiO₂-Netzwerk abgeschlossen wird. Das Tempern wird zur Beschleunigung der Reaktion vorzugsweise bei einer Temperatur von zumindest 200°C durchgeführt. Beim Tempern kommt es außerdem zu einer Verdichtung der Schicht 9. In der fertig verfestigten Schicht 9 beträgt dann der Gewichtsanteil des Sol-Gel-Bindemittels 11 berechnet als SiO₂ höchstens 25% der Gesamtmasse der Schicht, bevorzugt höchstens 20% der Gesamtmasse der Schicht.

Bei dem in Fig. 1 dargestellten Ausführungsbeispiel sind die plättchenförmigen Pigmentpartikel 13 außerdem überwiegend parallel zur Oberfläche 5 des Substrats 3 ausgerichtet. Dies bedeutet nicht, daß die Flächen der Plättchen streng parallel zur Oberfläche des Substrats verlaufen. Vielmehr ist damit zum Ausdruck gebracht, daß die Winkelverteilung der Flächennormalen der Pigmentpartikel nicht stochastisch ist, sondern vielmehr ein deutliches Maximum in Richtung der Flächennormalen der Substratoberfläche aufweist. Es hat sich überraschend gezeigt, daß dieser Effekt besonders einfach durch den Einsatz der vorstehend beschriebenen Füllstoffe mit kugelförmigen Füllstoffpartikeln 17 erreichbar ist.

Zusätzlich oder alternativ zu den plättchenförmigen Piugmenten können auch lumineszente Pigmente, oder sogenannte Leuchtphosphore wie beispielsweise YVO₄:Eu³⁺, Y₂O₄:Eu³⁺, LaPO₄:Ce³⁺, Tb³⁺ und BaMg₂Al₁₆O₂₇:Eu²⁺ zugegeben werden.

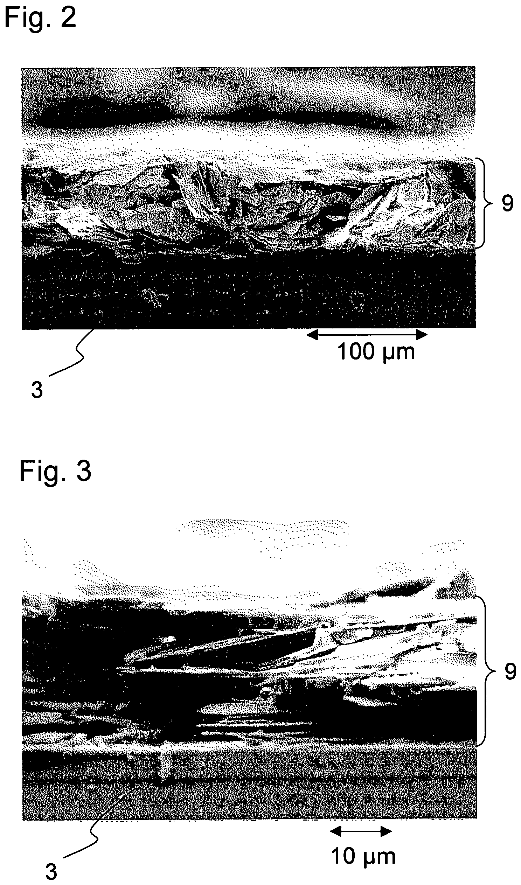

In den Fig. 2 und 3 sind zum Vergleich elektronenmikroskopische Aufnahmen einer Schicht ohne Füllstoffe (Fig. 2) und einer Schicht mit Füllstoffen (Fig. 3) gezeigt. Bei der Schicht ohne Füllstoffe kommt es zu einer nahezu regellosen Anordnung der Glimmerplättchen des Effektpigments in der Schicht 9. Demgegenüber ist in Fig. 3 ein Ausführungsbeispiel gezeigt, bei welchem Füllstoffe in Form kugelförmiger SiO₂-Partikel der Zusammensetzung für die Schicht 9 beigegeben wurden. Deutlich ist hier die nahezu zur Substratoberfläche parallele Ausrichtung der Glimmerplättchen des Effektpigments zu erkennen, wie sie auch in der schematischen Querschnittansicht der Fig. 1 angedeutet wurde. Die sehr feinen kugelförmigen Füllstoffpartikel sorgen dabei für eine gute Einregelung der Glimmerplättchen parallel zum Substrat. Eine derartige Schicht zeigt nicht nur einen deutlicheren Metalleffekt, außerdem weist sie auch eine verbesserte Kratz- und Abriebbeständigkeit auf.

Bei dem in Fig. 1 dargestellten Ausführungsbeispiel ist außerdem noch eine Versiegelungsschicht 20 auf der Dekorschicht 9 aufgebracht. Die Versiegelungsschicht kann beispielsweise Silikone enthalten, um die wasserabweisenden Eigenschaften der Beschichtung zu verbessern. Alternativ oder zusätzlich kann die Schicht 20 aber auch eine SiO₂-basierte Barrierebeschichtung sein. Die Schicht 20 kann durch Sputtern, Aufdampfen, plasmainduzierte chemische Dampfphasenabscheidung oder auch pyrolytische Abscheidung, beispielsweise aus Flamme oder Corona aufgebracht werden. Auch eine zusätzliche Sol-Gel-Beschichtung ist beispielsweise möglich.

Mit einer solchen Versiegelungsschicht 20 kann dann zusammen mit der ebenfalls eine gewisse Barrierewirkung entfaltenden Dekorschicht 9 beispielsweise wirksam verhindert werden, daß sich bei einer Gasbeheizung bildende Schwefelsäure die Glaskeramik angreift. Unter anderem können Lithium-Aluminosilikat-Glaskeramiken durch Schwefelsäure korrodiert werden. Die Erfindung stellt damit nicht nur eine besonders haltbare Dekorbeschichtung bereit, sondern kann auch noch die Haltbarkeit der Glaskeramik verbessern.

Fig. 4 zeigt eine Aufsicht auf die Unterseite 5 eines erfindungsgemäß beschichteten Glaskeramik-Kochfelds. Das Kochfeld weist mehrere Heizzonen 25 auf, unter welchen im Herd die Heizelemente angeordnet sind. Die Heizzonen können beispielsweise auf der Oberseite durch ein weiteres Dekor markiert sein. Bei diesem Ausführungsbeispiel kann die Dekorschicht 9 nicht nur die Bereiche, welche die Heizzonen 25 umgeben, sondern auch die Heizzonen 25 des Kochfelds selbst bedecken.

Die Dekorschicht 9 kann bei dem in Fig. 4 gezeigten Beispiel vorteilhaft auch lateral strukturiert sein, wobei Bereiche der Oberfläche des Substrats 3 keine Dekorschicht aufweisen. Bei dem in Fig. 4 gezeigten Beispiel ist dazu ein Feld 27 nicht mit der Dekorschicht beschichtet. Dieses Feld 27 kann für ein Sensorfeld und/oder auch für eine Anzeige vorgesehen sein, die unter dem Kochfeld 1 aufgrund der nicht vorhandenen Dekorschicht 9 sichtbar bleibt.

Weiterhin können auch verschiedene Bereiche der Oberfläche des Substrats 3 mit Dekorschichten unterschiedlicher Zusammensetzung und/oder Anmutung und/oder Farbe versehen sein. So kann beispielsweise die Dekorschicht innerhalb der Kochzonen 25 eine andere Zusammensetzung, Farbe oder Anmutung, als die umgebenden Bereiche aufweisen. Dies kann beispielsweise eine ästhetische Funktion oder auch eine die Kochzonen 25 kennzeichnende Funktion haben.

Auch können die optischen oder physikalischen Eigenschaften der Beschichtung im Bereich der Kochzonen 25 von umgebenden Bereichen durch eine andere Schichtzusammensetzung abweichen. So kann es wünschenswert sein, eine Schicht 9 im Bereich der Kochzonen 25 vorzusehen, die besonders temperaturstabil ist.

Die erfindungsgemäße Dekorschicht 9 ist nicht nur hinreichend temperaturbeständig, sondern auch imstande, die von den Heizelementen erzeugte Wärme für das Garen auf dem Kochfeld ausreichend gut zu leiten. Es hat sich insbesondere gezeigt, daß die Dekorbeschichtung auch in den heißen Bereichen 25 ihr optisches Erscheinungsbild auch nach langem Betrieb nicht verändert. Neben dem durch die ganzflächige Beschichtung erreichten ästhetischen Eindruck ist die Beschichtung 9 im Bereich der Heizzonen auch durch ihre Barrierewirkung gegenüber korrodierenden Gasen, wie etwa sich bei einer Gasbeheizung bildenden Schwefeloxiden sehr vorteilhaft.

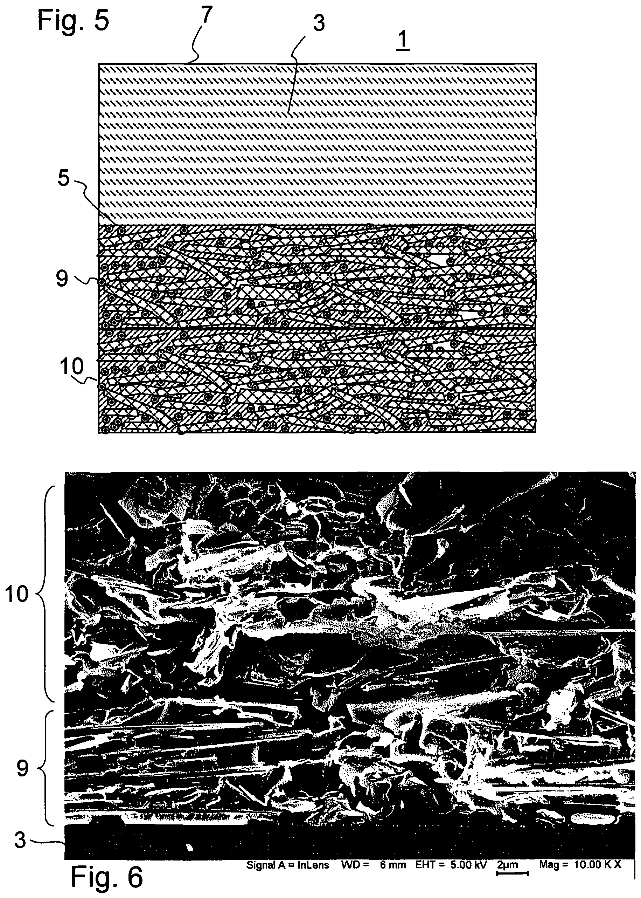

In Fig. 5 ist eine Variante des in Fig. 1 gezeigten Ausführungsbeispiels dargestellt. Auch bei der in Fig. 5 gezeigten Beschichtung umfasst die Dekorschicht mehrere Lagen, wobei in diesem Fall die Dekorschicht zwei Lagen 9 und 10 umfasst, bei denen jeweils eine Rezeptur wie für die Schicht 9 in Fig. 1 verwendet wurde. Beide Lagen 9, 10 wurden dementsprechend durch Auftrag einer Paste mit einem Sol-Gel-Bindemittel, Füllstoffen und Pigmenten und anschließendem Aushärten hergestellt. Insbesondere hat es sich dabei als vorteilhaft gezeigt, wenn die zuerst aufgetragene Schicht 9 vor dem Auftragen der Schicht 19 bereits ausgehärtet wird. Insbesondere wird die Schicht 9 dabei bei einer höheren Temperatur von zumindest 350 °C, beispielsweise bei 500 °C und die zweite Schicht bei einer niedrigeren Temperatur von höchstens 300 °C, beispielsweise bei 200 °C eingebrannt. Durch diese Doppelschicht werden Löcher vermieden, die bei nur einfachem Auftrag des Gemisches, insbesondere bei einer für den Siebdruck geeigneten Paste mit entsprechenden rheologischen Eigenschaften auftreten können.

Fig. 6 zeigt eine elektronenmikroskopische Aufnahme einer solchen zweischichtigen Dekorschicht. Die beiden Schichten 9, 10 der Dekorschicht sind anhand der unterschiedlichen Ausrichtung der plättchenförmigen Pigmentpartikel gut zu unterscheiden. Die Pigmentpartikel der unteren, beziehungsweise zuerst aufgebrachten Schicht 9 zeigen einen höheren Grad an Ausrichtung verglichen mit der später aufgebrachten Schicht 10. Durch die überwiegende Ausrichtung der plättchenförmigen Pigmentpartikel der ersten Schicht 9 parallel zur Oberfläche des Substrats 3 wird ein Glanzeffekt ähnlich wie bei der in Fig. 3 gezeigten Schicht erreicht.

Die Schichtdicke der unteren Schicht 9 beträgt bei dem dargestellten Ausführungsbeispiel etwa 6 bis 10 Mikrometer. Die Schichtdicke der weiteren Schicht 10 liegt im Bereich von 10 bis 15 Mikrometern. Bei diesem Ausführungsbeispiel wurde die Schicht 9 bei 400 °C, die Schicht 10 bei nur 200 °C eingebrannt. Aufgrund der niedrigeren Einbrandtemperatur bleiben organische Bestandteile erhalten und es wird so insgesamt eine hydrophobe Beschichtung mit gleichzeitig besserer Beständigkeit gegen Wasser und Öl geschaffen.

## Patentansprüche

1. Verfahren zum Herstellen von Glas- oder Glaskeramik-Artikeln mit einer Dekorschicht, bei welchem wenigstens ein Dekorpigment und zumindest ein Füllstoff mit einem Sol-Gel-Bindemittel vermischt werden, und die mit dem Sol-Gel-Bindemittel vermischten Pigmente und Füllstoffe auf dem Glas- oder Glaskeramik-Substrat des Artikels unter Ausbildung einer Dekorschicht mit porösem keramikartigem Gefüge durch Tempern ausgehärtet werden, wobei die Dekorschicht einen Gewichtsanteil von Pigment und Füllstoffen höher als der Gewichtsanteil des verfestigten und ausgehärteten Sol-Gel-Bindemittels aufweist, bei welcher der Anteil von Sol-Gel-Bindemittel bevorzugt höchstens 40 Gewichtsprozent, vorzugsweise höchstens 30 Gewichtsprozent, besonders bevorzugt höchstens 20 Gewichtsprozent in der Schicht beträgt, wobei die Dekorschicht mit einer Versiegelung versehen wird und wobei das Dekorpigment plättchenförmige Pigmentpartikel umfasst, welche überwiegend parallel zur Oberfläche des Glas- oder Glaskeramik-Substrats ausgerichtet sind.

2. Verfahren gemäß Anspruch 1, bei welchem das Sol-Gel-Bindemittel sich während des Temperns verdichtet.

3. Verfahren gemäß Anspruch 1 oder 2, **dadurch gekennzeichnet, dass** das Sol-Gel-Bindemittel und Dekorpigment vorgemischt und dann das Gemisch auf das Substrat aufgetragen wird.

4. Verfahren gemäß Anspruch 1, 2 oder 3, **dadurch gekennzeichnet, dass** dem Gemisch mit Dekorpigment und Sol-Gel-Bindemittel zusätzliche Füllstoffe und/oder Lösungsmittel und/oder Additive zugesetzt werden.

5. Verfahren gemäß einem der vorstehenden Ansprüche, **dadurch gekennzeichnet, dass** das Sol-Gel-Bindemittel aus einem Sol hergestellt wird, welches unter Reaktion wenigstens einer hydrolysierbaren metallorganischen, insbesondere einer organischen Silizium-Verbindung mit Wasser unter Bildung von Kieselsäure und/oder organischen Kieselsäurederivaten in einer Hydrolysereaktion und anschließender. Kondensationsreaktion erzeugt wird.

6. Verfahren gemäß einem der vorstehenden Ansprüche, **dadurch gekennzeichnet, dass** das Sol-Gel-Bindemittel oder das Sol wenigstens teilweise metallorganische, insbesondere organische Silizium-Verbindungen enthält, bei welchen nach Hydrolysereaktion ein oder mehrere organische Reste gebunden bleiben.

7. Verfahren gemäß Anspruch 6, **dadurch gekennzeichnet, dass** das Sol oder das Sol-Gel-Bindemittel Triethoxymethylsilan enthält.

8. Verfahren gemäß einem der vorstehenden Ansprüche, **dadurch gekennzeichnet, dass** das Sol-Gel-Bindemittel aus einem wenigstens Tetraethoxysilan und Triethoxymethylsilan enthaltenden Sol hergestellt wird.

9. Verfahren gemäß einem der vorstehenden Ansprüche, **dadurch gekennzeichnet, dass** das Sol-Gel-Bindemittel aus einem Sol hergestellt wird, wobei zur Herstellung des Sols Triethoxymethylsilan und Tetraethoxysilan gemischt, eine Säure mit einer Metalloxid-Dispersion, insbesondere SiO₂-Dispersion vermischt und die beiden Gemische anschließend zusammengemischt werden.

10. Verfahren gemäß einem der vorstehenden Ansprüche, **dadurch gekennzeichnet, dass** das Sol-Gel-Bindemittel unter zumindest teilweiser Verflüchtigung von zugesetztem und/oder bei der Reaktion entstehendem Lösungsmittel eines Sols hergestellt wird.

11. Verfahren gemäß Anspruch 10, **dadurch gekennzeichnet, dass** das Sol einen zugesetzten und/oder bei der Reaktion entstehenden Alkohol als Lösungsmittel enthält, der verflüchtigt.

12. Verfahren gemäß einem der vorstehenden Ansprüche, **dadurch gekennzeichnet, dass** sich beim Tempern Wasser und/oder Alkohol vom Sol-Gel-Bindemittel unter Bildung eines Metalloxid-Gerüsts, insbesondere eines SiO₂-Gerüsts abspaltet.

13. Verfahren gemäß einem der vorstehenden Ansprüche, **dadurch gekennzeichnet, dass** das Dekorpigment Glimmerplättchen, insbesondere beschichtete Glimmerplättchen und/oder Metall-Plättchen, vorzugsweise Aluminium-Plättchen enthält.

14. Verfahren gemäß einem der vorstehenden Ansprüche, **dadurch gekennzeichnet, dass** der Füllstoff kugelförmige Partikel enthält.

15. Verfahren gemäß einem der vorstehenden Ansprüche, **dadurch gekennzeichnet, dass** ein Füllstoff mit pyrogener Kieselsäure in der Dekorschicht eingesetzt wird.

16. Verfahren gemäß einem der vorstehenden Ansprüche, **dadurch gekennzeichnet, dass** der Beschichtungszusammensetzung kolloiddisperse SiO₂-Partikel als Füllstoff zugegeben werden.

17. Verfahren gemäß einem der vorstehenden Ansprüche, **dadurch gekennzeichnet, dass** die Beschichtungszusammensetzung für die Dekorschicht einen Füllstoffanteil von höchstens 40 Gewichtsprozent der Masse des oder der plättchenförmigen Pigmente enthält.

18. Verfahren gemäß einem der vorstehenden Ansprüche, **dadurch gekennzeichnet, dass** der Beschichtungszusammensetzung für die Dekorschicht Füllstoffe in Form kolloiddisperser SiO₂-Partikel und/oder pyrogene Kieselsäure-Partikel mit einem Anteil von jeweils höchstens 20 Gewichtsprozent der Masse des oder der plättchenförmigen Pigmente zugegeben werden.

19. Verfahren gemäß einem der vorstehenden Ansprüche, **dadurch gekennzeichnet, dass** das Tempern bei einer Temperatur kleiner als der Sintertemperatur der Schichtbestandteile durchgeführt wird.

20. Verfahren gemäß Anspruch 19, **dadurch gekennzeichnet, dass** das Tempern bei einer Temperatur von zumindest 200°C erfolgt.

21. Verfahren gemäß Anspruch 20, **dadurch gekennzeichnet, dass** die Dekorschicht mit Silikonen versiegelt wird.

22. Verfahren gemäß einem der vorstehenden Ansprüche, **dadurch gekennzeichnet, dass** die Dekorschicht mit einer Metalloxid-basierten Schicht, insbesondere einer SiO₂-basierten Schicht abgedeckt wird.

23. Verfahren gemäß einem der vorstehenden Ansprüche, **dadurch gekennzeichnet, dass** die Dekorschicht mit einer Schicht durch Aufdampfen, Sputtern, chemische Dampfphasenabscheidung, insbesondere plasmainduzierte chemische Dampfphasenabscheidung, pyrolytisches Abscheiden oder Sol-Gel-Beschichtung beschichtet wird.

24. Verfahren gemäß einem der vorstehenden Ansprüche, **dadurch gekennzeichnet, dass** die Dekorschicht nicht vollflächig auf das Substrat aufgebracht wird.

25. Verfahren gemäß vorstehendem Anspruch, **dadurch gekennzeichnet, dass** verschiedene Bereiche der Oberfläche des Substrats mit Dekorschichten unterschiedlicher Zusammensetzung und/oder Anmutung und/oder Farbe versehen werden.

26. Verfahren gemäß einem der vorstehenden Ansprüche, bei welchem eine weitere Schicht auf das Substrat aufgetragen wird, bei welcher wenigstens ein Dekorpigment mit einem Sol-Gel-Bindemittel vermischt ist, und wobei das mit dem Sol-Gel-Bindemittel vermischte Pigment der weiteren Schicht auf dem Glas- oder Glaskeramik-Substrat des Artikels zu einer Dekorschicht durch Tempern ausgehärtet wird.

27. Verfahren gemäß dem vorstehenden Anspruch, **dadurch gekennzeichnet, dass** vor dem Auftrag der weiteren Schicht die zuerst aufgetragene Schicht getempert wird.

28. Verfahren gemäß dem vorstehenden Anspruch, **dadurch gekennzeichnet, dass** die zuerst aufgebrachte Schicht bei einer höheren Temperatur getempert wird, als die zweite Schicht, vorzugsweise, dass die erste Schicht bei einer Temperatur von zumindest zeitweise wenigstens 350 °C und die zweite Schicht bei einer Temperatur von höchstens 300 °C eingebrannt wird.

29. Glas- oder Glaskeramik-Artikel mit Dekorbeschichtung, insbesondere hergestellt mit einem Verfahren gemäß einem der vorstehenden Ansprüche, umfassend ein Glas- oder Glaskeramik-Substrat mit einer Dekorschicht, **dadurch gekennzeichnet, dass** die Dekorschicht ein poröses, insbesondere nanoporöses keramikartiges Gefüge mit Pigment, Füllstoff und einem ausgehärteten Sol-Gel-Bindemittel umfaßt, wobei die Dekorschicht einen Gewichtsanteil von Pigment und Füllstoffen höher als der Gewichtsanteil des verfestigten und ausgehärteten Sol-Gel-Bindemittels aufweist, bei welcher der Anteil von Sol-Gel-Bindemittel bevorzugt höchstens 40 Gewichtsprozent, vorzugsweise höchstens 30 Gewichtsprozent, besonders bevorzugt höchstens 20 Gewichtsprozent in der Schicht beträgt, wobei die Dekorschicht mit einer Versiegelungsschicht abgedeckt ist und wobei das Dekorpigment plättchenförmige Pigmentpartikel umfasst, welche überwiegend parallel zur Oberfläche des Glas- oder Glaskeramik-Substrats ausgerichtet sind.

30. Glas- oder Glaskeramik-Artikel gemäß Anspruch 29, **dadurch gekennzeichnet, dass** das ausgehärtete Sol-Gel-Bindemittel SiO₂-haltig ist.

31. Glas- oder Glaskeramik-Artikel gemäß Anspruch 29 oder 30, **dadurch gekennzeichnet, dass** das ausgehärtete Sol-Gel-Bindemittel an ein Metalloxid-Netzwerk, vorzugsweise ein SiO₂-Netzwerk gebundene organische Bestandteile enthält.

32. Glas- oder Glaskeramik-Artikel gemäß einem der vorstehenden Ansprüche 29 bis 31, **gekennzeichnet durch** ein Siliziumoxid-haltiges Sol-Gel-Bindemittel in der Dekorschicht, wobei der Gewichtsanteil von Silizium des Sol-Gel-Bindemittels berechnet als SiO₂ höchstens 25% der Gesamtmasse der Schicht, bevorzugt höchstens 20% der Gesamtmasse der Schicht beträgt.

33. Glas- oder Glaskeramik-Artikel einem der vorstehenden Ansprüche 29 bis 32, **dadurch gekennzeichnet, dass** das Dekorpigment Glimmer und/oder Metall-Plättchen, vorzugsweise Aluminium-Plättchen enthält.

34. Glas- oder Glaskeramik-Artikel gemäß einem der vorstehenden Ansprüche 29 bis 33, **dadurch gekennzeichnet, dass** ein Füllstoff enthalten ist, welcher kleine kugelförmige Partikel umfaßt.

35. Glas- oder Glaskeramik-Artikel gemäß Anspruch 34, **dadurch gekennzeichnet, dass** der Füllstoff pyrogene Kieselsäure und/oder Partikel aus kolloiddisperser SiO₂-Dispersion enthält.

36. Glas- oder Glaskeramik-Artikel gemäß einem der Ansprüche 34 bis 35, **dadurch gekennzeichnet, dass** die Dekorschicht einen Füllstoffanteil von höchstens 40 Gewichtsprozent der Masse des oder der plättchenförmigen Pigmente enthält.

37. Glas- oder Glaskeramik-Artikel gemäß einem der Ansprüche 34 bis 35, **dadurch gekennzeichnet, dass** die Dekorschicht pyrogene Kieselsäure-Partikel und/oder Partikel aus kolloiddisperser SiO₂-Dispersion mit einem Gewichtsanteil von jeweils höchstens 20 Gewichtsprozent der Masse des oder der plättchenförmigen Pigmente enthält.

38. Glas- oder Glaskeramik-Artikel gemäß Anspruch 29, **dadurch gekennzeichnet, dass** die Versiegelung der Dekorschicht zumindest eine der Versiegelungsschichten:
- Silikon,
- eine Metalloxid-basierte Schicht, insbesondere eine SiO₂-basierte Schicht umfaßt.

39. Glas- oder Glaskeramik-Artikel gemäß einem der vorstehenden Ansprüche 29 bis 38, **gekennzeichnet durch** eine nicht vollflächige Dekorschicht.

40. Glas- oder Glaskeramik-Artikel gemäß Anspruch 39, **dadurch gekennzeichnet, dass** verschiedene Bereiche der Oberfläche des Substrats mit Dekorschichten unterschiedlicher Zusammensetzung, und/oder Anmutung und/oder Farbe versehen sind.

41. Glas- oder Glaskeramik-Artikel gemäß einem der vorstehenden Ansprüche 29 bis 40, **gekennzeichnet durch** eine Dekorschicht, welche einen Leuchtphosphor enthält.

42. Glas- oder Glaskeramik-Artikel gemäß einem der vorstehenden Ansprüche 29 bis 41, **gekennzeichnet durch** eine mehrschichtige, vorzugsweise zweischichtigen Dekorschicht mit Pigment und einem ausgehärteten Sol-Gel-Bindemittel.

43. Glas- oder Glaskeramik-Artikel gemäß dem vorstehenden Anspruch, **dadurch gekennzeichnet, dass** mehrere Lagen der Dekorschicht Pigment und einem ausgehärteten Sol-Gel-Bindemittel enthalten.

44. Glas- oder Glaskeramik-Artikel gemäß einem der vorstehenden Ansprüche 29 bis 43, **gekennzeichnet durch** eine Dekorschicht mit einer Schichtdicke von höchstens 70 Mikrometern.

45. Glaskeramik-Kochfeld, beschichtet mit einem Verfahren gemäß einem der Ansprüche 1 bis 28 oder umfassend einen Glaskeramik-Artikel gemäß einem der Ansprüche 29 bis 44.

46. Glaskeramik-Kochfeld gemäß Anspruch 45, **dadurch gekennzeichnet, dass** die Dekorschicht auf der Unterseite angeordnet ist.

47. Glaskeramik-Kochfeld gemäß Anspruch 45 oder 46, **dadurch gekennzeichnet, dass** die Dekorschicht auch zumindest eine Heizzone des Kochfelds bedeckt.

## Claims

1. A method for producing glass or glass ceramic articles having a decorative layer, wherein at least one decorative pigment and at least one filler are mixed with a sol-gel binder, and the pigments and fillers mixed with the sol-gel binder are cured on the glass or glass ceramic substrate of the article by annealing to form a decorative layer having a porous ceramic-like structure; wherein the decorative layer includes a weight fraction of pigment and fillers that is higher than the weight fraction of the solidified and cured sol-gel binder, the fraction of sol-gel binder in the layer being preferably not more than 40 percent by weight, more preferably not more than 30 percent by weight, most preferably not more than 20 percent by weight; wherein the decorative layer is provided with a sealing; and wherein the decorative pigment comprises flake-like pigment particles which are oriented predominantly in parallel to the surface of the glass or glass ceramic substrate.

2. The method according to claim 1, wherein the sol-gel binder undergoes densification during the annealing.

3. The method according to claim 1 or 2, **characterised in that** the sol-gel binder and the decorative pigment are pre-mixed, and then the mixture is applied to the substrate.

4. The method according to claim 1, 2 or 3, **characterised in that** additional fillers and/or solvents and/or additives are added to the mixture including decorative pigment and sol-gel binder.

5. The method according to any one of the preceding claims, **characterised in that** the sol-gel binder is prepared from a sol which is generated in a hydrolysis reaction and subsequent condensation reaction involving reaction of at least one hydrolysable organometallic compound, in particular an organic silicon compound, with water to form silica and/or organic silica derivatives.

6. The method according to any one of the preceding claims, **characterised in that** the sol-gel binder or the sol comprises at least partly organometallic compounds, in particular organic silicon compounds, in which one or more organic radicals remain bonded after hydrolysis reaction.

7. The method according to claim 6, **characterised in that** the sol or the sol-gel binder contains triethoxymethylsilane.

8. The method according to any one of the preceding claims, **characterised in that** the sol-gel binder is prepared from a sol containing at least tetraethoxysilane and triethoxymethylsilane.

9. The method according to any one of the preceding claims, **characterised in that** the sol-gel binder is prepared from a sol, the sol being prepared by mixing triethoxymethylsilane and tetraethoxysilane, mixing an acid with a metal oxide dispersion, in particular an SiO₂ dispersion, and subsequently mixing the two mixtures together.

10. The method according to any one of the preceding claims, **characterised in that** the sol-gel binder is prepared under at least partial volatilization of sol solvent added and/or produced in the reaction.

11. The method according to claim 10, **characterised in that** the sol comprises, as the solvent, an alcohol which is added and/or produced in the reaction, and which undergoes volatilization.

12. The method according to any one of the preceding claims, **characterised in that** said annealing is accompanied by a separation of water and/or alcohol from the sol-gel binder to form a metal oxide framework, in particular an SiO₂ framework.

13. The method according to any one of the preceding claims, **characterised in that** the decorative pigment comprises mica flakes, in particular coated mica flakes, and/or metal flakes, in particular aluminium flakes.

14. The method according to any one of the preceding claims, **characterised in that** the filler comprises spherical particles.

15. The method according to any one of the preceding claims, **characterised in that** a filler with fumed silica is used in the decorative layer.

16. The method according to any one of the preceding claims, **characterised in that** colloidally dispersed SiO₂ particles are added as a filler to the coating composition.

17. The method according to any one of the preceding claims, **characterised in that** the coating composition for the decorative layer comprises a filler fraction of not more than 40 percent by weight of the mass of the one or more flake-like pigment(s).

18. The method according to any one of the preceding claims, **characterised in that** fillers in the form of colloidally dispersed SiO₂ particles and/or fumed silica particles are added to the coating composition for the decorative layer, with a fraction of not more than 20 percent by weight of the mass of the one or more flake-like pigment(s) in each case.

19. The method according to any one of the preceding claims, **characterised in that** the annealing is performed at a temperature lower than the sintering temperature of the layer constituents.

20. The method according to claim 19, **characterised in that** the annealing is accomplished at a temperature of at least 200 °C.

21. The method according to claim 20, **characterised in that** the decorative layer is sealed with silicones.

22. The method according to any one of the preceding claims, **characterised in that** the decorative layer is covered with a metal oxide-based layer, in particular an SiO₂-based layer.

23. The method according to any one of the preceding claims, **characterised in that** the decorative layer is coated with a layer by vapour deposition, sputter deposition, chemical vapour deposition, in particular plasma-induced chemical vapour deposition, pyrolytic deposition, or sol-gel coating.

24. The method according to any one of the preceding claims, **characterised in that** the decorative layer is not applied over the entire surface of the substrate.

25. The method according to the preceding claim, **characterised in that** different portions of the surface of the substrate are provided with decorative layers of different composition and/or appearance and/or colour.

26. The method according to any one of the preceding claims, wherein a further layer is applied to the substrate, in which at least one decorative pigment is mixed with a sol-gel binder, and wherein the pigment mixed with the sol-gel binder of the further layer is cured on the glass or glass ceramic substrate of the article by annealing to form a decorative layer.

27. The method according to the preceding claim, **characterised in that** the layer applied first is annealed before the further layer is applied.

28. The method according to the preceding claim, **characterised in that** the layer applied first is annealed at a higher temperature than the second layer, preferably that the first layer is fired at a temperature of at least temporarily at least 350 °C, and the second layer at a temperature of not more than 300 °C.

29. A glass or glass ceramic article having a decorative coating, in particular produced using a method according to any one of the preceding claims, comprising a glass or glass ceramic substrate having a decorative layer; **characterised in that** the decorative layer comprises a porous, in particular nanoporous ceramic-like structure including pigment, filler and a cured sol-gel binder; wherein the decorative layer includes a weight fraction of pigment and fillers that is higher than the weight fraction of the solidified and cured sol-gel binder, the fraction of sol-gel binder in the layer being preferably not more than 40 percent by weight, more preferably not more than 30 percent by weight, most preferably not more than 20 percent by weight; wherein the decorative layer is covered by a sealing layer; and wherein the decorative pigment comprises flake-like pigment particles which are oriented predominantly in parallel to the surface of the glass or glass ceramic substrate.

30. The glass or glass ceramic article according to claim 29, **characterised in that** the cured sol-gel binder contains SiO₂.

31. The glass or glass ceramic article according to claim 29 or 30, **characterised in that** the cured sol-gel binder comprises organic constituents bonded to a metal oxide network, preferably an SiO₂ network.

32. The glass or glass ceramic article according to any one of the preceding claims 29 to 31, **characterised by** a sol-gel binder containing silicon oxide in the decorative layer, wherein the weight fraction of silicon in the sol-gel binder, calculated as SiO₂, is not more than 25 % of the total mass of the layer, preferably not more than 20 % of the total mass of the layer.

33. The glass or glass ceramic article according to any one of the preceding claims 29 to 32, **characterised in that** the decorative pigment comprises mica and/or metal flakes, preferably aluminium flakes.

34. The glass or glass ceramic article according to any one of the preceding claims 29 to 33, **characterised by** including a filler that comprises small spherical particles.

35. The glass or glass ceramic article according to claim 34, **characterised in that** the filler comprises fumed silica and/or particles of colloidally dispersed SiO₂ dispersion.

36. The glass or glass ceramic article according to any one of claims 34 to 35, **characterised in that** the decorative layer comprises a filler fraction of not more than 40 percent by weight of the mass of the one or more flake-like pigment(s).

37. The glass or glass ceramic article according to any one of claims 34 to 35, **characterised in that** the decorative layer comprises fumed silica particles and/or particles of colloidally dispersed SiO₂ dispersion, with a weight fraction of not more than 20 percent by weight of the mass of the one or more flake-like pigment(s) in each case.

38. The glass or glass ceramic article according to claim 29, **characterised in that** the sealing of the decorative layer comprises at least one of the following sealing layers:
- silicone;
- a metal oxide-based layer, in particular an SiO₂-based layer.

39. The glass or glass ceramic article according to any one of the preceding claims 29 to 38, **characterised by** a layer that is not extending over the entire surface.

40. The glass or glass ceramic article according to claim 39, **characterised in that** different portions of the surface of the substrate have been provided with decorative layers that are different in composition and/or appearance and/or colour.

41. The glass or glass ceramic article according to any one of the preceding claims 29 to 40, **characterised by** a decorative layer which comprises a luminous phosphor.

42. The glass or glass ceramic article according to any one of the preceding claims 29 to 41, **characterised by** a multilayer, preferably double-layer decorative layer containing pigment and a cured sol-gel binder.

43. The glass or glass ceramic article according to the preceding claim, **characterised in that** a plurality of layers of the decorative layer comprise pigment and a cured sol-gel binder.

44. The glass or glass ceramic article according to any one of the preceding claims 29 to 43, **characterised by** a decorative layer having a layer thickness of not more than 70 micrometres.

45. A glass ceramic cooktop, coated using a method according to any one of claims 1 to 28, or comprising a glass ceramic article according to any one of claims 29 to 44.

46. The glass ceramic cooktop according to claim 45, **characterised in that** the decorative layer is disposed on the lower surface.

47. The glass ceramic cooktop according to claim 45 or 46, **characterised in that** the decorative layer also covers at least one heating zone of the cooktop.

## Revendications

1. Procédé de fabrication d'articles en verre ou vitrocéramique dotés d'un revêtement décoratif, dans lequel au moins un pigment décoratif et au moins une charge sont mélangés à un liant sol-gel, et les pigments et les charges mélangés avec le liant sol-gel sont durcis à la trempe sur le substrat en verre ou en vitrocéramique de l'article en formant un revêtement décoratif ayant une structure poreuse de type céramique, où le revêtement décoratif comprend une proportion en poids de pigment et de charges supérieure à la proportion en poids du liant sol-gel solidifié et durci, où la proportion de liant sol-gel est de préférence au maximum de 40 % en poids, de préférence au maximum de 30 % en poids, de manière particulièrement préférée de 20 % en poids dans le revêtement, où le revêtement décoratif est doté d'un scellement et où le pigment décoratif comprend des particules de pigment lamellaires, qui sont orientées principalement parallèlement à la surface du substrat en verre ou vitrocéramique.

2. Procédé selon la revendication 1, dans lequel le liant sol-gel se condense pendant la trempe.

3. Procédé selon la revendication 1 ou 2, **caractérisé en ce que** le liant sol-gel et le pigment décoratif sont pré-mélangés et le mélange est ensuite appliqué sur le substrat.

4. Procédé selon la revendication 1, 2 ou 3, **caractérisé en ce que** le mélange de pigment décoratif et de liant sol-gel est additionné de charges et/ou de solvants et/ou d'additifs supplémentaires.

5. Procédé selon l'une des revendications précédentes, **caractérisé en ce que** le liant sol-gel est préparé à partir d'un sol, qui est produit en faisant réagir au moins un composé de silicium hydrolysable organométallique, en particulier organique, avec de l'eau en formant de l'acide silicique et/ou des dérivés organiques d'acide silicique au cours d'une réaction d'hydrolyse et d'une réaction de condensation consécutive.

6. Procédé selon l'une des revendications précédentes, **caractérisé en ce que** le liant sol-gel ou le sol contient des composés de silicium au moins partiellement organométalliques, en particulier organiques, dans lesquels un ou plusieurs radicaux organiques sont restés liés après la réaction d'hydrolyse.

7. Procédé selon la revendication 6, **caractérisé en ce que** le sol ou le liant sol-gel contient du triéthoxyméthylsilane.

8. Procédé selon l'une des revendications précédentes, **caractérisé en ce que** le liant sol-gel est préparé à partir d'un sol contenant au moins du tétraéthoxysilane et du triéthoxyméthylsilane.

9. Procédé selon l'une des revendications précédentes, **caractérisé en ce que** le liant sol-gel est préparé à partir d'un sol, où du tétraéthoxysilane et du triéthoxyméthylsilane sont mélangés pour préparer le sol, un acide est mélangé avec une dispersion d'oxyde métallique, en particulier une dispersion de SiO₂, et les deux mélanges sont ensuite mélangés ensemble.

10. Procédé selon l'une des revendications précédentes, **caractérisé en ce que** le liant sol-gel est préparé en faisant s'évaporer au moins partiellement le solvant, qui a été ajouté et/ou produit lors de la réaction, d'un sol.

11. Procédé selon la revendication 10, **caractérisé en ce que** le sol contient comme solvant un alcool volatil qui a été ajouté et/ou produit lors de la réaction.

12. Procédé selon l'une des revendications précédentes, **caractérisé en ce que**, lors de la trempe, l'eau et/ou l'alcool se sépare du liant sol-gel en formant une structure d'oxyde métallique, en particulier une structure de SiO₂.

13. Procédé selon l'une des revendications précédentes, **caractérisé en ce que** le pigment décoratif contient des lamelles de mica, en particulier des lamelles de mica et/ou des lamelles de métal revêtues, de préférence des lamelles d'aluminium.

14. Procédé selon l'une des revendications précédentes, **caractérisé en ce que** la charge contient des particules sphériques.

15. Procédé selon l'une des revendications précédentes, **caractérisé en ce qu'**une charge est mise en oeuvre dans le revêtement décoratif avec de l'acide silicique pyrogène.

16. Procédé selon l'une des revendications précédentes, **caractérisé en ce que** la composition du revêtement est additionnée de particules de SiO₂ dispersées dans un colloïde comme charge.

17. Procédé selon l'une des revendications précédentes, **caractérisé en ce que** la composition de revêtement pour le revêtement décoratif contient une proportion de charge d'au maximum 40 % en poids de la masse du ou des pigments lamellaires.

18. Procédé selon l'une des revendications précédentes, **caractérisé en ce que** la composition de revêtement pour le revêtement décoratif est additionnée de charges sous forme de particules de SiO₂ dispersées dans un colloïde et/ou des particules d'acide silicique pyrogène en une proportion de respectivement au maximum 20 % en poids de la masse du ou des pigments lamellaires.

19. Procédé selon l'une des revendications précédentes, **caractérisé en ce que** la trempe est réalisée à une température inférieure à la température de frittage des composants du revêtement.

20. Procédé selon la revendication 19, **caractérisé en ce que** la trempe s'effectue à une température d'au moins 200°C.

21. Procédé selon la revendication 20, **caractérisé en ce que** le revêtement décoratif est scellé avec des silicones.

22. Procédé selon l'une des revendications précédentes, **caractérisé en ce que** le revêtement décoratif est recouvert d'une couche à base d'oxyde métallique, en particulier d'une couche à base de SiO₂.

23. Procédé selon l'une des revendications précédentes, **caractérisé en ce que** le revêtement décoratif est revêtu d'une couche par évaporation, pulvérisation, dépôt chimique en phase vapeur, en particulier dépôt chimique en phase vapeur assistée par plasma, dépôt par pyrolyse ou revêtement sol-gel.

24. Procédé selon l'une des revendications précédentes, **caractérisé en ce que** le revêtement décoratif n'est pas appliqué sur le substrat sur toute la surface.

25. Procédé selon la revendication précédente, **caractérisé en ce que** différentes zones de la surface du substrat sont dotées de revêtements décoratifs de différente composition et/ou impression et/ou couleur.

26. Procédé selon l'une des revendications précédentes, dans lequel une autre couche est appliquée sur le substrat, où au moins un pigment décoratif est mélangé avec un liant sol-gel, et où le pigment mélangé avec le liant sol-gel de l'autre couche est durci à la trempe sur le substrat en verre ou en vitrocéramique de l'article pour donner un revêtement décoratif.

27. Procédé selon la revendication précédente, **caractérisé en ce que**, avant l'application de l'autre couche, la couche appliquée en premier est trempée.

28. Procédé selon la revendication précédente, **caractérisé en ce que** la couche appliquée en premier est trempée à une température supérieure à la deuxième couche, de préférence **en ce que** la première couche est calcinée à une température au moins temporairement d'au moins 350°C et la deuxième couche à une température d'au maximum 300°C.

29. Article en verre ou en vitrocéramique doté d'un revêtement décoratif, fabriqué en particulier par un procédé selon l'une des revendications précédentes, comprenant un substrat en verre ou en vitrocéramique doté d'un revêtement décoratif, **caractérisé en ce que** le revêtement décoratif comprend une structure poreuse, notamment nanoporeuse, de type céramique avec un pigment, une charge et un liant sol-gel durci, où le revêtement décoratif présente une proportion en poids de pigment et de charges supérieure à la proportion en poids du liant sol-gel solidifié et durci, où la proportion de liant sol-gel est de préférence au maximum de 40 % en poids, de préférence au maximum de 30 % en poids, de manière particulièrement préférée d'au maximum 20 % en poids dans le revêtement, où le revêtement décoratif est recouvert d'une couche de scellement et où le pigment décoratif comprend des particules de pigment lamellaires, qui sont orientées principalement parallèlement à la surface du substrat en verre ou vitrocéramique.

30. Article en verre ou en vitrocéramique selon la revendication 29, **caractérisé en ce que** le liant sol-gel durci contient du SiO₂.

31. Article en verre ou en vitrocéramique selon la revendication 29 ou 30, **caractérisé en ce que** le liant sol-gel durci contient des composés organiques liés à un réseau d'oxyde métallique, de préférence un réseau de SiO₂.

32. Article en verre ou en vitrocéramique selon l'une des revendications précédentes 29 à 31, **caractérisé par** un liant sol-gel contenant de l'oxyde de silicium dans le revêtement décoratif, où la proportion en poids de silicium du liant sol-gel calculé sous forme de SiO₂ est d'au maximum 25 % de la masse totale du revêtement, de préférence d'au maximum 20 % de la masse totale du revêtement.

33. Article en verre ou en vitrocéramique selon l'une des revendications précédentes 29 à 32, **caractérisé en ce que** le pigment décoratif contient du mica et/ou des lamelles de métal, de préférence des lamelles d'aluminium.

34. Article en verre ou en vitrocéramique selon l'une des revendications précédentes 29 à 33, caractérisé qu'une charge comprenant des petites particules sphériques est présente.

35. Article en verre ou en vitrocéramique selon la revendication 34, **caractérisé en ce que** la charge contient de l'acide silicique pyrogène et/ou des particules d'une dispersion de SiO₂ dispersée dans un colloïde.

36. Article en verre ou en vitrocéramique selon l'une des revendications 34 et 35, **caractérisé en ce que** le revêtement décoratif contient une proportion de charge d'au maximum 40 % en poids de la masse du ou des pigments lamellaires.

37. Article en verre ou en vitrocéramique selon l'une des revendications 34 et 35, **caractérisé en ce que** le revêtement décoratif contient des particules d'acide silicique pyrogène et/ou des particules d'une dispersion de SiO₂ dispersée dans un colloïde en une proportion en poids de respectivement au maximum 20 % en poids de la masse du ou des pigments lamellaires.

38. Article en verre ou en vitrocéramique selon la revendication 29, **caractérisé en ce que** le scellement du revêtement décoratif comprend au moins l'une des couches de scellement :
- silicone,
- une couche à base d'oxyde métallique, en particulier une couche à base de SiO₂.

39. Article en verre ou en vitrocéramique selon l'une des revendications précédentes 29 à 38, **caractérisé par** un revêtement décoratif qui ne s'étend pas sur toute la surface.

40. Article en verre ou en vitrocéramique selon la revendication 39, **caractérisé en ce que** différentes zones de la surface du substrat sont dotées de revêtements décoratifs de différente composition et/ou impression et/ou couleur.

41. Article en verre ou en vitrocéramique selon l'une des revendications précédentes 29 à 40, **caractérisé par** un revêtement décoratif qui contient un phosphore luminescent.

42. Article en verre ou en vitrocéramique selon l'une des revendications précédentes 29 à 41, **caractérisé par** un revêtement décoratif multicouche, de préférence bicouche, avec un pigment et un liant sol-gel durci.

43. Article en verre ou en vitrocéramique selon la revendication précédente, **caractérisé en ce que** plusieurs couches du revêtement décoratif contiennent un pigment et un liant sol-gel durci.

44. Article en verre ou en vitrocéramique selon l'une des revendications précédentes 29 à 43, **caractérisé par** un revêtement décoratif ayant une épaisseur d'au maximum 70 micromètres.

45. Plaque de cuisson en vitrocéramique, revêtue par un procédé selon l'une des revendications 1 à 28 ou comprenant un article en vitrocéramique selon l'une des revendications 29 à 44.

46. Plaque de cuisson en vitrocéramique selon la revendication 45, **caractérisée en ce que** le revêtement décoratif est disposé sur la face inférieure.

47. Plaque de cuisson en vitrocéramique selon la revendication 45 ou 46, **caractérisée en ce que** le revêtement décoratif recouvre aussi au moins une zone de chauffage de la plaque de cuisson.
